# EUROPÄISCHE PATENTSCHRIFT

(11) **EP 1 426 264 B1**
(45) Veröffentlichungstag und Bekanntmachung des Hinweises auf die Patenterteilung: **02.11.2006**
(21) Anmeldenummer: 03027994.7
(22) Anmeldetag: 05.12.2003
(51) Int. Cl.: B61K 11/00, E01B 19/00

(54) **Anlage und Verfahren zur Aufnahme von Bremssand**
Device and process for recovery of brake sand
Dispositif et méthode pour la récupération du sable de freinage

(30) Priorität: 06.12.2002 DE 20219018 U
(43) Veröffentlichungstag der Anmeldung: 09.06.2004
(73) Patentinhaber: Klein Anlagenbau AG, 57572 Niederfischbach (DE)
(72) Erfinder: Buchen, Joachim, 57548 Kirchen (DE); Marberg, Kurt, 57072 Siegen (DE); Wemhoff, Hans, 57518 Betzdorf (DE)
(74) Vertreter: Hiebsch, Gerhard F.

(56) Entgegenhaltungen:
- US-A- 1 846 154
- US-A- 4 938 239
- US-B1- 6 290 143

## Beschreibung

Die Erfindung betrifft eine Anlage sowie ein Verfahren zur Behandlung von Bremssand, der aus einem Vorratsbehälter eines Fahrzeuges zum Fahrgrund hin geleitet wird.

Die US 6,290,143 B1 beschreibt eine Vorrichtung zum Sammeln und Abführen von flüssigem Abfall auf einem Schienenweg. Zwischen den Schienen erstreckt sich ein pfannen- bzw. rinnenartiges Kunststoffprofil als Sammelbehälter mit mittigem Abflussanschluss. Dieses Kunststoffprofil ist nahe den Schienen jeweils mit einem diesen innenseitig anliegenden Kragenrand versehen. Auf diesen beiden Kragenrändern liegt ein Deckelprofil auf, das jenes Kunststoffprofil überspannt und dank einer querschnittlich -- von einer mittigen Längsachse als Firstbereich ausgehenden -- leichten Wölbung die zu sammelnde Flüssigkeit randwärts führt, wo letztere mittels Durchlässen abwärts in das Kunststoffprofil geführt wird.

Die US-A-1,846,154 zeigt zwei Auffangrinnen beidseits eines Schienenprofils zur Aufnahme von Sand od.dgl. Stoff, der auf das Schienenprofil gelangt und aufgefangen werden muss.

Durch die DE 24 43 552 C ist es bekannt, Schüttgüter mittels Fördereinrichtungen Verbrauchern zuzuteilen, etwa die Sandkästen von Schienenfahrzeugen mit Bremssand nachzufüllen. Für diese Aufgabe muss eine Zuteilvorrichtung in der Lage sein, wechselnde Mengen bis zu etwa vierzig Litern Schüttgut je Zuteilvorgang abzugeben. Für den Fördervorgang von der Zuteilvorrichtung bis zum Sandkasten hat sich das seit vielen Jahren bekannte Schubförderverfahren durch mehrere Meter lange Schlauchleitungen bewährt. Hierbei bewegt sich der Sand als geschlossene Masse ohne Pfropfen und ohne zwischengelagerte Luftpolster durch die Förderleitung. Beim Schubförderverfahren werden nur geringe Luftmengen verbraucht, die Fördergeschwindigkeit ist sehr klein, es entstehen an flexiblen Förderleitungen keine schlagenden Bewegungen, und die geringen Förderluftmengen lassen sich mit geringem Aufwand am Sandbehälter fassen sowie einem Filter zuführen.

Bei Zuteilvorrichtungen für Bremssand werden üblicherweise Schläuche als Förderleitungen zu den Sandkästen verwendet. Am sandkastenseitigen Schlauchende wird eine Füllspitze angebracht, die in geschlossener Stellung für Luft durchlässig ist, für Sand aber undurchlässig bleibt; dies ist erforderlich, damit der Sand beim Öffnen des Ventils an der Füllspitze ohne Stoß austritt. Füllspitzen dieser Art werden etwa in der Schrift zu DE 295 09 923 U1 beschrieben.

Bevor ein Schienenfahrzeug ein Depot zum Liniendienst verlässt, wird u.a. eine Funktionsprobe der Sandstreuer vorgenommen. Der gestreute Sand fällt auf die Gleise und wird manuell durch Kehren oder mit Staubsaugern vom Boden entfernt. Befinden sich die Gleise über einer Wartungsgrube, so fällt der Sand auf den Grubenboden und vermischt sich dort mit angesammeltem Schmutz, oft auch mit Ölresten. Außer den Reinigungskosten fallen dann auch noch hohe Deponiekosten für dieses -- als Sondermüll eingestufte -- Gemisch an.

In Kenntnis dieser Gegebenheiten hat sich der Erfinder das Ziel gesetzt, eine Vorrichtung und ein Verfahren zu schaffen, mit denen die beschriebenen Mängel bei der Sandaufnahme beseitigt werden sowie letztere automatisch, d.h. ohne manuellen Einsatz, erfolgt; es soll sichergestellt werden, dass der Sand aus Probesandungen separat aufgefangen wird. Zudem soll dabei der erforderliche Energieeinsatz gering gehalten werden.

Zur Lösung dieser Aufgabe führt die Lehre der unabhängigen Ansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist im Fahrgrund zumindest eine behälterartige -- fahrzeugwärts offene -- Auffangeinrichtung für das Schüttgut angeordnet sowie an eine Unterdruck führende Leitung angeschlossen, durch welche die vagabundierenden und eingefangenen Sandpartikel abgesaugt werden.

Die Auffangeinrichtung ist in einer bevorzugten Ausgestaltung als Auffangrinne ausgebildet sowie im Rinnentiefsten mit wenigstens einer Austragsöffnung versehen, welche an die Unterdruck führende Leitung angeschlossen ist.

Nach einem weiteren Merkmal der Erfindung ist die Auffangeinrichtung für ein auf Laufschienen geführtes Schienenfahrzeug ein unter der Laufschiene festgelegter Auffangtrichter, dessen Trichtertiefstes mit der/den Austragsöffnung/en versehen ist; bevorzugt sollen entlang der Schienenpaarung mehrere Auffangtrichter angeordnet und jeweils mit der die Schienenpaarung begleitenden, Unterdruck führenden Leitung verbunden sein.

Als günstig hat es sich erwiesen, der Austragsöffnung einen Auslaufraum mit zumindest einer zur Umgebungsluft gerichteten Ansaugöffnung einerseits sowie einer Anschlussleitung für die Unterdruck führende Leitung anderseits nachzuordnen. Dieser Auslaufraum soll zwischen zumindest zwei durch Ventile verschließbare Ansaugöffnungen für Umgebungsluft angeordnet und vorteilhafter Weise von einem Gehäuse begrenzt werden, in das einerseits ein eine Ansaugöffnung enthaltender Rohrstumpf mündet, der mit einem Drosselventil versehen ist. Anderseits soll vom Auslaufraum ein Zwischenrohr mit Schnüffelventil ausgehen.

Rohrstumpf und Zwischenrohr werden erfindungsgemäß zueinander koaxial ausgerichtet.

Nach einem anderen Merkmal der Erfindung ist das Zwischenrohr andernends an ein Ansaugventil angeschlossen und dieses durch eine -- gegebenenfalls flexible -- Leitung mit der Unterdruck führenden Absaugleitung verbunden. Der besseren Steuerung halber soll in einem etwa radialen Rohrarm des Zwischenrohres eine Ansaugöffnung vorgesehen werden und dieser ein gegen die Kraft eines Kraftspeichers relativ zu ihr bewegbarer Verschlussteller zugeordnet sein.

Dank dieser erfindungsgemäßen Anlage ist es nunmehr möglich, die vagabundierenden Partikel des Schüttgutes in jenen Auffangeinrichtungen zu fangen und in zumindest einer an diese angeschlossenen Förderleitung durch Unterdruck abzuführen.

Die eingangs erörterte Aufgabe wird also i.w. dadurch gelöst, dass entlang der Laufschienen, an denen Probesandungen durchgeführt werden, Rinnen zum Auffangen dieses Sandes angeordnet werden und der aufgefangene Sand durch angeschlossene, unterdruckführende Leitungen angesaugt wird.

Die Rinnen können entsprechend den Zuglängen der Schienenfahrzeuge durchgängig ausgeführt und in Sektionen unterteilt werden; Sektor nach Sektor wird abgesaugt. Dadurch wird nur eine Unterdruckquelle mit geringer Antriebsleistung notwendig. Als Unterdruckquellen eignen sich besonders Staubsaugeranlagen mit integriertem Zyklon und Filter.

Vorteilhaft ist es, wenn sich die Stellen entlang der Schienen, an denen der Sand der Probesandungen anfällt, genau festlegen lassen, so können an diesen Stellen einzelne kurze Rinnenstücke angeordnet werden. Mehrere dieser Rinnenstücke, die an eine gemeinsame, zum Staubsauger führende Absaugleitung angeschlossen sind, können dann von einem Unterdruckerzeuger taktweise nacheinander leergesaugt werden.

Besonders bei nassem, winterlichem Wetter kann auch Feuchtigkeit sowie von den Schienenfahrzeugen abtauender Schnee und Eis in die Rinnen gelangen. Der nun feuchte Sand in den Rinnenstücken kann zu Verstopfungen in den angeschlossenen Absaugleitungen führen. Deshalb ist es zweckmäßig, die dem Saugstrom in der Absaugleitung zugeleitete Sandmenge zu regeln. Eine einfache Möglichkeit besteht darin, in Strömungsrichtung vor und hinter der Sandzufuhrstelle eine Ansaugöffnung für die Förderluft anzuordnen und zumindest den Querschnitt der Öffnung hinter der Sandzufuhrstelle einstellbar auszuführen.

Um Verstopfungen der Absaugleitung sicher zu vermeiden, ist es jedoch besser, diesen Querschnitt dann zu vergrößern, wenn mehr Unterdruck in der Absaugleitung entsteht bzw. zu verkleinern, wenn weniger Unterdruck in der Absaugleitung vorhanden ist. Dadurch wird weniger bzw. mehr Sand vom Luftstrom der Öffnung vor der Sandzufuhrstelle in die Absaugleitung geblasen, die Verstopfungsgefahr also vermindert. Als Regler für diese Aufgabe eignen sich sog. "Schnüffelventile" bekannter Bauweise.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt
- Fig. 1:: eine schematische Skizze zu einer erfindungsgemäßen Anlage;

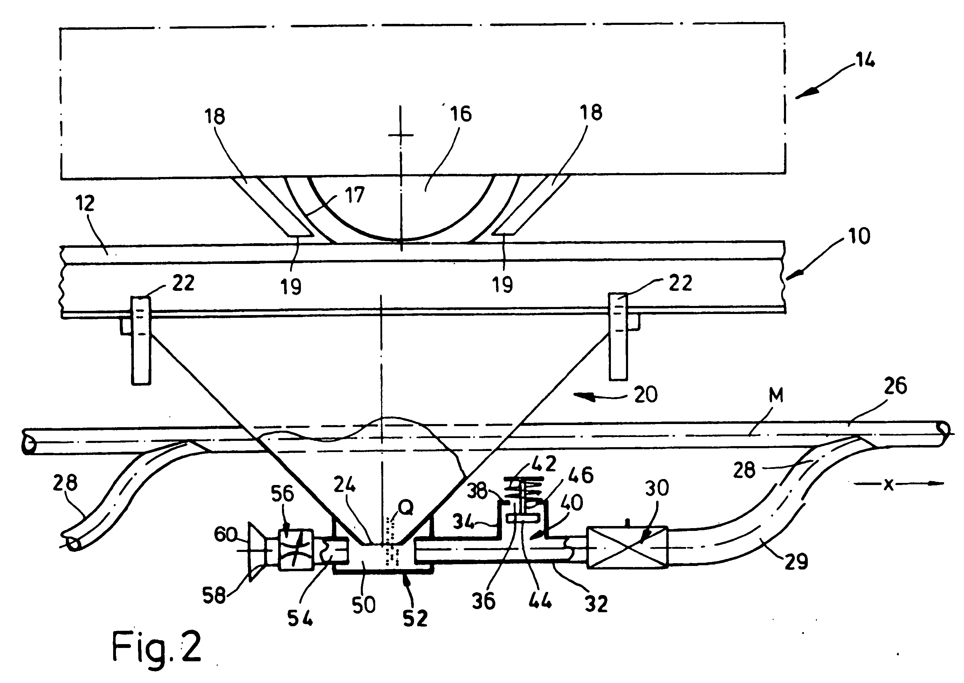

- Fig. 2:: eine teilweise geschnittene Längssicht durch einen Teil der Anlage mit einem Rinnenabschnitt zur Sandaufnahme.

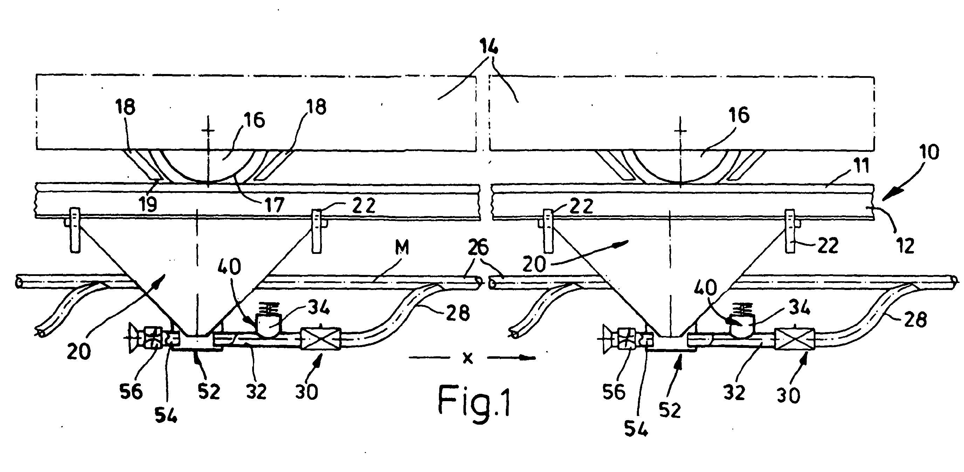

Einem Paar von Laufschienen 10 für ein bei 14 skizzenhaft angedeutetes Schienenfahrzeug sind dessen Laufräder 16 zugeordnet, die jeweils einem Schienenkopf 11 aufsitzen und auf diesem abrollbar sind. Beidseits des in Fig. 1 dargestellten Laufrades 16 ist jeweils ein zu dessen Umfang 17 geneigtes Streurohr 18 angeordnet, durch dessen Mündung 19 Sand gestreut werden soll; die zu diesen Streurohren 18 führende Sandverteilungseinrichtung des Schienenfahrzeugs 14 ist in der Zeichnung aus Gründen der Übersichtlichkeit vernachlässigt.

Dem Fußflansch 12 der Laufschiene 10 ist unterhalb des hier stehenden Laufrades 16 ein als Auffangtrichter 20 ausgebildetes Rinnenelement mittels Klemmprofilen 22 untergehängt. Dieser Auffangtrichter 20 ist breiter ausgeführt als die Laufschiene 10, damit bei einer Probesandung auf die Laufschiene 10 rieselndes Schüttgut an dieser seitlich vorbei in den Auffangtrichter 20 zu fallen vermag. In diesem ist das Schüttgut bei Q lediglich angedeutet.

Hinter dem mit einer abwärts gerichteten Austragsöffnung 24 ausgestatteten Auffangtrichter 20 verläuft in Fig. 1 durchgängig eine etwa schienenparallele Absaugleitung 26 mit seitlich abragenden Anschlussstücken 28, die andernends an ein Ansaugventil 30 angeschlossen sind, dies in Fig. 1 unter Zwischenschaltung eines Schlauchabschnitts 29. An das Ansaugventil 30 ist anderseits ein zu jenem Schlauchabschnitt 29 axial verlaufendes Rohr 32 angeschlossen sowie an dieses radial ein Rohrarm 34 -- mit seinen Querschnitt überspannender, eine Ansaugöffnung 36 anbietender Kopfplatte 38 -- als Gehäuse für ein Schnüffelventil 40 angeformt. Jener Ansaugöffnung 36 ist ein -- gegen einen der Kopfplatte 38 des Schnüffelventils 40 aufsitzenden Kraftspeicher 42 in Form einer Schraubenfeder bewegbarerVerschlussteller 44 an einem Axialstab 46 zugeordnet.

Das -- parallel zur Längsachse M der Absaugleitung 26 verlaufende -- Zwischenrohr 32 mündet in einen Auslaufraum 50 eines die Austragsöffnung 24 des Auffangtrichters 20 unterfangenden Gehäuses 52, von dem koaxial zum Zwischenrohr 32 ein Rohrstumpf 54 mit eingefügtem Drosselventil 56 ausgeht. Dieser endet mit einem Trichterkragen 58, der eine Öffnung 60 umgibt. Im übrigen sind an der Absaugleitung 26 in axialen Abständen zueinander mehrere der oben beschriebenen Einrichtungen angeordnet.

Ein nicht dargestellter Staubsauger erzeugt Unterdruck in der Absaugleitung 26, und die von diesem Staubsauger angesaugte Luft strömt in Strömungsrichtung x. Wird das vorteilhafterweise als Quetschventil ausgebildete Saugventil 30 geöffnet, so wird Luft durch die Ansaugöffnung 60 im Trichterkragen 58 des Rohrstumpfes 54 angesaugt. Die Saugventile 30 der anderen an der Absaugleitung 26 angeschlossenen Einrichtungen bleiben dabei geschlossen. Die Ansaugmenge der Luft kann mittels des Drosselventils 56 eingestellt werden; der angesaugte Luftstrom reißt Sand von dem Sand mit, der durch die Austragsöffnung 24 in den Auslaufraum 50 fällt.

Wenn das Ansaugventil 30 geschlossen ist -- und also im Zwischenrohr 32 kein Unterdruck herrscht --, schließt der durch die Kraft der Schraubenfeder 42 innenseitig gegen die Kopfplatte 38 gepresste Verschlussteller 44 jene Ansaugöffnung 36.

Wird bei geöffnetem Saugventil 30 Sand aus dem Auffangtrichter 20 durch die strömende Luft mitgerissen, so vergrößert sich der Unterdruck im Schnüffelventil 38 in Abhängigkeit von der Menge Sand im Förderluftstrom der Absaugleitung 26.

Der Unterdruck saugt den Verschlussteller 44 von seinem Sitz an der Kopfplatte 38, und entsprechend dem sich gegen die Kraft der Schraubenfeder 42 bildenden Öffnungsquerschnitt im Schnüffelventil 38 wird Luft durch dessen Ansaugöffnung 36 gesaugt. Um etwa diese Luftmenge wird der durch das Drosselventil 56 einkommende und den Sand mitreißende Luftstrom vermindert. Die aus dem Auslaufraum 50 mitgerissene Sandmenge wird geringer, der Unterdruck in der Absaugleitung 26 vermindert sich wieder. Es ergibt sich eine gute Ausnutzung des Saugluftstromes zur Sandförderung, die sich selbständig den verschiedenen Entfernungen der einzelnen Auffangtrichter 20 vom Staubsauger und wechselnden Eigenschaften des Sandes anpasst.

Mit dem Schlauchabschnitt 29 ist diese Einrichtung flexibel an die Absaug- oder Rohrleitung 26 gekoppelt, so dass die Einrichtung dank der Klemmstücke 22 zur Wartung leicht von den Laufschienen 10 abgenommen zu werden vermag.

Das in Fig. 1 links erkennbare Anschlussstück 28 bildet die Anschlussstelle für die nächste gleichartige Einrichtung. An eine Absaugleitung 26 können so -- wie gesagt -- mehrere dieser Einrichtungen gekoppelt sein.

Mittels der Saugventile 30 der einzelnen Einrichtungen können alle diese Einrichtungen einer Absaugleitung 26 nacheinander betrieben werden sowie der in ihren Auffangtrichtern 20 lagernde Sand einfach, sauber und betriebssicher mit geringem Energieeinsatz zu einem Staubsauger gefördert werden. In des letzteren Zyklon und Filter werden die Sandpartikel vom Luftstrom abgeschieden und fallen in einen Lagerbehälter.

## Patentansprüche

1. Anlage zur Behandlung von Bremssand, der aus einem Vorratsbehälter eines Fahrzeuges (14) zum Fahrgrund hin geleitet wird,
**dadurch gekennzeichnet,**
**dass** im Fahrgrund zumindest eine behälterartige fahrzeugwärts offene Auffangeinrichtung (20) für das Schüttgut (Q) angeordnet sowie an eine Unterdruck führende Leitung (26) angeschlossen ist.

2. Anlage nach Anspruch 1, **dadurch gekennzeichnet, dass** die Auffangeinrichtung als Auffangrinne ausgebildet sowie im Rinnentiefsten mit wenigstens einer Austragsöffnung (24) versehen ist, welche an die Unterdruck führende Leitung (26) angeschlossen ist.

3. Anlage für ein auf Laufschienen (10) geführtes Schienenfahrzeug (14) nach Anspruch 1, **dadurch gekennzeichnet, dass** die Auffangeinrichtung ein unter der Laufschiene (10) festgelegter Auffangtrichter (20) ist, dessen Trichtertiefstes mit der/den Austragsöffnung/en (24) versehen ist.

4. Anlage nach Anspruch 3, **dadurch gekennzeichnet, dass** entlang der Schienenpaarung mehrere Auffangtrichter (20) angeordnet sind, die jeweils mit der die Schienenpaarung begleitenden, Unterdruck führenden Leitung (26) verbunden sind.

5. Anlage nach einem der Ansprüche 2 bis 4, **dadurch gekennzeichnet, dass** der Austragsöffnung (24) ein Auslaufraum (50) mit zumindest einer zur Umgebungsluft gerichteten Ansaugöffnung (60) einerseits sowie einer Anschlussleitung (32, 28) für die Unterdruck führende Leitung (26) anderseits nachgeordnet ist.

6. Anlage nach Anspruch 5, **dadurch gekennzeichnet, dass** der Auslaufraum (50) zwischen zumindest zwei durch Ventile (40, 56) verschließbaren Ansaugöffnungen (36, 60) für Umgebungsluft angeordnet ist.

7. Anlage nach Anspruch 5 oder 6, **dadurch gekennzeichnet, dass** der Auslaufraum (50) von einem Gehäuse (52) begrenzt ist, in das einerseits ein eine Ansaugöffnung (60) enthaltender Rohrstumpf (54) mündet, der mit einem Drosselventil (56) versehen ist.

8. Anlage nach Anspruch 5 oder 7, **dadurch gekennzeichnet, dass** vom Auslaufraum (50) ein Zwischenrohr (32) mit Schnüffelventil (40) ausgeht.

9. Anlage nach Anspruch 7 oder 8, **dadurch gekennzeichnet, dass** Rohrstumpf (54) und Zwischenrohr (32) zueinander koaxial ausgerichtet sind.

10. Anlage nach Anspruch 8 oder 9, **dadurch gekennzeichnet, dass** das Zwischenrohr (32) andernends an ein Ansaugventil (30) angeschlossen und dieses mit der Unterdruck führenden Leitung (26) verbunden ist.

11. Anlage nach Anspruch 8 oder 9, **dadurch gekennzeichnet, dass** das Zwischenrohr (32) andernends an ein Ansaugventil (30) angeschlossen und dieses durch eine flexible Leitung (28, 29) mit der Unterdruck führenden Leitung (26) verbunden ist.

12. Anlage nach einem der Ansprüche 8 bis 11, **dadurch gekennzeichnet, dass** in einem etwa radialen Rohrarm (34) des Zwischenrohres (32) eine Ansaugöffnung (36) vorgesehen und dieser ein gegen die Kraft eines Kraftspeichers (42) relativ zu ihr bewegbarer Verschlussteller (44) zugeordnet ist.

13. Verfahren zur Behandlung von Bremssand, der aus einem Vorratsbehälter eines Fahrzeuges (14) zum Fahrgrund hin geleitet wird, insbesondere unter Einsatz der Anlage nach einem der voraufgehenden Ansprüche, **dadurch gekennzeichnet, dass** die vagabundierenden Partikel des Shüttgutes (Q) in im Fahrgrund angeordnete Auffangeinrichtungen (20) gefangen und in zumindest einer an diese angeschlossenen Förderleitung (26) durch Unterdruck abgeführt werden.

## Claims

1. System for the treatment of brake sand which is guided out of a storage container of a vehicle (14) to the ground,
**characterised in that**
at least one container-like collecting device (20) for the bulk material (Q) which opens towards the vehicle is arranged in the ground and connected to a vacuum-conducting pipe (26).

2. System according to claim 1, **characterised in that** the collecting device is constructed as a collecting channel and provided at the bottom of the channel with at least one discharge opening (24) which is connected to the vacuum-conducting pipe (26).

3. System for a rail vehicle (14) guided on running rails (10) according to claim 1, **characterised in that** the collecting device is a collecting hopper (20) which is fixed under the running rail (10) and of which the bottom is provided with the discharge opening(s) (24).

4. System according to claim 3, **characterised in that** along the pair of rails are arranged several collecting hoppers (20) which are in each case connected to the vacuum-conducting pipe (26) accompanying the pair of rails.

5. System according to any of claims 2 to 4, **characterised in that** behind the discharge opening (24) are arranged an outlet chamber (50) with at least one suction opening (60) directed towards the ambient air on the one hand and a connecting pipe (32, 28) for the vacuum-conducting pipe (26) on the other hand.

6. System according to claim 5, **characterised in that** the outlet chamber (50) is arranged between at least two suction openings (36, 60) for ambient air closable by valves (40, 56).

7. System according to claim 5 or 6, **characterised in that** the outlet chamber (50) is defined by a housing (52) into which leads on the one hand a pipe end (54) which contains a suction opening (60) and which is provided with a throttle valve (56).

8. System according to claim 5 or 7, **characterised in that** an intermediate pipe (32) with snifting valve (40) starts from the outlet chamber (50).

9. System according to claim 7 or 8, **characterised in that** pipe end (54) and intermediate pipe (32) are oriented coaxially with each other.

10. System according to claim 8 or 9, **characterised in that** the intermediate pipe (32) is connected at the other end to a suction valve (30) and the latter is connected to the vacuum-conducting pipe (26).

11. System according to claim 8 or 9, **characterised in that** the intermediate pipe (32) is connected at the other end to a suction valve (30) and the latter is connected by a flexible pipe (28, 29) to the vacuum-conducting pipe (26).

12. System according to any of claims 8 to 11, **characterised in that** in an approximately radial pipe arm (34) of the intermediate pipe (32) is provided a suction opening (36) and associated with the latter is a closure plate (44) movable relative to it against the force of an energy storing device (42).

13. Method for the treatment of brake sand which is guided out of a storage container of a vehicle (14) to the ground, in particular using the system according to any of the preceding claims, **characterised in that** the stray particles of bulk material (Q) are caught in collecting devices (20) arranged in the ground and carried away by vacuum in at least one conveying pipe (26) connected to them.

## Revendications

1. Installation de traitement de sable de freinage qui est acheminé depuis un récipient de réserve d'un véhicule (14) jusqu'au fond de roulage, **caractérisée en ce que** dans le fond de roulage, au moins un dispositif de récupération (20) en forme de récipient, ouvert côté véhicule pour le produit en vrac (Q) est disposé, et est raccordé à une conduite sous vide (26).

2. Installation selon la revendication 1, **caractérisée en ce que** le dispositif de récupération est configuré comme rigole de récupération, et qu'il est pourvu au point le plus profond de la rigole d'au moins une ouverture de vidange (24), laquelle est raccordée à la conduite sous vide (26).

3. Installation pour un véhicule ferroviaire (14) guidé sur des rails (10) selon la revendication 1, **caractérisée en ce que** le dispositif de récupération est un entonnoir de récupération (20) fixé sous le rail (10), dont le point le plus bas de l'entonnoir est doté de l'ouverture / des ouvertures de vidange (24).

4. Installation selon la revendication 3, **caractérisée en ce que** plusieurs entonnoirs de récupération (20) sont disposés le long de la paire de rails, entonnoirs qui sont reliés chacun à la conduite sous vide (26) accompagnant la paire de rails.

5. Installation selon l'une des revendications 2 à 4, **caractérisée en ce qu'**en aval de l'ouverture de vidange (24) est disposé un espace de vidange (50) avec au moins un orifice d'aspiration (60) orienté vers l'air environnant d'un côté, ainsi qu'une conduite de raccordement (32, 28) pour la conduite sous vide (26) de l'autre côté.

6. Installation selon la revendication 5, **caractérisée en ce que** l'espace de vidange (50) est disposé entre au moins deux orifices d'aspiration (36, 60) pour l'air environnant pouvant être fermés par des vannes (40, 56).

7. Installation selon la revendication 5 ou 6, **caractérisée en ce que** l'espace de vidange (50) est limité par un boîtier (52), dans lequel débouche d'un côté un embout de tuyau (54) contenant un orifice d'aspiration (60), qui est doté d'une vanne d'étranglement (56).

8. Installation selon la revendication 5 ou 7, **caractérisée en ce qu'**un tuyau intermédiaire (32) avec une soupape de reniflard (40) part de l'espace de vidange (50).

9. Installation selon la revendication 7 ou 8, **caractérisée en ce que** l'embout de tuyau (54) et le tuyau intermédiaire (32) sont orientés coaxialement l'un à l'autre.

10. Installation selon la revendication 8 ou 9, **caractérisée en ce que** le tuyau intermédiaire (32) est raccordé à son autre extrémité à une vanne d'aspiration (30) et **en ce que** celle-ci est reliée à la conduite sous vide (26).

11. Installation selon la revendication 8 ou 9, **caractérisée en ce que** le tuyau intermédiaire (32) est raccordé à son autre extrémité à une vanne d'aspiration (30) et **en ce que** celle-ci est reliée à la conduite sous vide (26) par une conduite flexible (28, 29).

12. Installation selon l'une des revendications 8 à 11, **caractérisée en ce que**, dans un bras de tuyau (34) à peu près radial du tuyau intermédiaire (32), un orifice d'aspiration (36) est prévu et qu'à celui-ci est affectée une tête de soupape (44) mobile par rapport à lui contre la force d'un accumulateur de force (42).

13. Procédé de traitement de sable de freinage qui est acheminé d'un récipient de réserve d'un véhicule (14) au fond de roulage, en particulier moyennant l'utilisation de l'installation selon l'une des revendications précédentes, **caractérisé en ce que** les particules vagabondes du matériau en vrac (Q) sont capturées dans des dispositifs de récupération (20) disposés dans le fond de roulage et sont évacuées par le vide dans au moins une conduite de transport (26) raccordée à ces dernières.
